# EUROPEAN PATENT APPLICATION

(11) **EP 2 000 884 A1**
(43) Date of publication of application: **10.12.2008**
(21) Application number: 07109936.0
(22) Date of filing: 08.06.2007
(51) Int. Cl.: G06F 3/01, G06F 3/048

(54) **Shape-changing disply for a handheld electronic device**

(71) Applicant: Research In Motion Limited, Waterloo, Ontario N2L 3W8 (CA)
(72) Inventor: Fyke, Steven, Waterloo, Ontario, N2L 6M1 (CA)
(74) Representative: Fennell, Gareth Charles

(57) **Abstract**

A system and method is disclosed that provides for a shape changing upper surface of an adaptive display screen on a wireless handheld communication device. The system and method include visually displaying visibly different key arrangement to an operator of the device in dependence upon the mode of operation of the incorporating device. The shape changing upper surface is presented to the operator for selective digital press-engagement. The shape changing upper surface also changes shape in dependence upon the presented key arrangement.

## Description

A portion of the disclosure of this patent document contains material which is subject to copyright protection. The copyright owner has no objection to the facsimile reproduction by any one of the patent document or patent disclosure as it appears in the Patent and Trademark Office patent file or records, but otherwise reserves all copyright rights whatsoever.

### FIELD

The present disclosure, in a broad sense, is directed toward handheld electronic devices including those without communication capabilities such as Personal Digital Assistants (PDAs), and more specifically the disclosure is directed toward handheld communication devices that have wireless communication capabilities and the networks within which the wireless communication devices operate. Furthermore, the disclosure presents solutions regarding displays capable of facilitating user input on such devices.

### BACKGROUND

With the proliferation of wireless communications systems, compatible handheld communication devices are becoming more prevalent, as well as advanced. Whereas in the past such handheld communication devices were typically limited to either voice transmission (cell phones) or text transmission (pagers and PDAs), today's consumer often demands a multi-functional device capable of performing both types of transmissions, including even sending and receiving e-mail. Furthermore, these higher-performance devices can also be capable of sending and receiving other types of data including that which allows the viewing and use of Internet websites. These higher level functionalities necessarily require greater user interaction with the devices through included user interfaces (UIs) which may have originally been designed to accommodate making and receiving telephone calls and sending messages over a related Short Messaging Service (SMS). As might be expected, suppliers of such mobile communication devices and the related service providers are anxious to meet these customer requirements, but the demands of these more advanced functionalities have in many circumstances rendered the traditional user interfaces unsatisfactory, a situation that has caused designers to have to improve the UIs through which users input information and control these sophisticated operations.

Additionally, the size of the display screen available on such devices has seen increasing attention. In order to maximize the size of the display screen on a device, it may be necessary to limit input devices located on the front surface of the device. Typically, this can involve reducing the size of a keyboard on the front surface or assembling the device in a clam-shell, slidable, or other multi-part configurations. Alternatively, a touch screen can be implemented such that the user of the device inputs information into the device using a stylus, the user's fingertip, or other object. The stylus interface or other touch screen input devices prevent the user from experiencing tactile feedback from activation of a portion of the display screen. This can lead the user to make mistakes in inputting data and/or become frustrated while trying to input the desired information.

The present disclosure provides solutions to these and other problems through the use of a shape-changing upper surface on an adaptive display screen that is capable of presenting visibly different key arrangements on the adaptive display screen.

### BRIEF DESCRIPTION OF THE DRAWINGS

Exemplary methods and arrangements conducted and configured according to the advantageous solutions presented herein are depicted in the accompanying drawings wherein:

FIG. 1 depicts a handheld communication device with an adaptive display screen cradled in the palm of a user's hand;

FIG. 2A depicts a handheld communication device with an adaptive display screen showing both an alphabetic key arrangement and a navigational key arrangement;

FIG. 2B depicts a handheld communication device with a phone key arrangement and a navigational key arrangement on an adaptive display screen;

FIG. 3A depicts an example of a shape that the adaptive display screen can present to the operator;

FIG. 3B depicts another example of a shape that the adaptive display screen can present to the operator;

FIG. 3C depicts yet another example of a shape that the adaptive display screen can present to the operator;

FIG. 3D depicts a solid shape adaptive surface in a flat configuration;

FIG. 4 illustrates an exemplary QWERTY keyboard layout;

FIG. 5 illustrates an exemplary QWERTZ keyboard layout;

FIG. 6 illustrates an exemplary AZERTY keyboard layout;

FIG. 7 illustrates an exemplary Dvorak keyboard layout;

FIG. 8 illustrates a QWERTY keyboard layout paired with a traditional ten-key keyboard;

FIG. 9 illustrates ten digits comprising the numerals 0-9 arranged in a telephone keypad configuration, including the * and # keys flanking the 0 key;

FIG. 10 illustrates a numeric phone key arrangement according to the ITU Standard E.161 including both numerals and letters;

FIG. 11 illustrates a full alphabetic key arrangement shown on the adaptive display screen of the handheld electronic device;

FIG. 12 illustrates a reduced alphabetic key arrangement and a navigational key arrangement on the adaptive display screen of the handheld electronic device;

FIG. 13 illustrates another example of a full alphabetic key arrangement on the adaptive display screen of the handheld electronic device;

FIG. 14 illustrates another example of a reduced alphabetic key arrangement on the adaptive display screen of the handheld electronic device;

FIG. 15 illustrates a phone key arrangement shown on the adaptive display screen of the handheld device with a physical keyboard;

FIG. 16 is a block diagram representing a wireless handheld communication device interacting in a communication network; and

FIG. 17 is a flow chart illustrating the method of adaptation of the display screen.

### DETAILED DESCRIPTION

As intimated hereinabove, one of the more important aspects of the handheld electronic device to which this disclosure is directed is its size. While some users will grasp the handheld device in both hands, it is intended that a predominance of users will cradle the handheld device in one hand in such a manner that input and control over the handheld device can be affected using the thumb of the same hand in which the handheld device is held. However, it is appreciated that additional control can be effected by using both hands. As a handheld device that is desirably pocketable, the size of the handheld device must be kept relatively small. Of the handheld device's dimensions, limiting its width is important for the purpose of assuring cradleability in a user's hand. Moreover, it is preferred that the width of the handheld device be maintained at less than eight centimeters (approximately three inches). Keeping the handheld device within these dimensional limits provides a hand cradleable unit that users prefer for its useability and portability. Limitations with respect to the height (length) of the handheld device are less stringent when considering hand-cradleability. Therefore, in order to gain greater size, the handheld device can be advantageously configured so that its height is greater than its width, but still remains easily supported and operated in one hand.

A potential drawback is presented by the small size of the handheld device in that there is limited exterior surface area for the inclusion of user input and handheld device output features. This is especially true for the "prime real estate" on the front face of the device, where it is most advantageous to include a display screen that outputs information to the user.

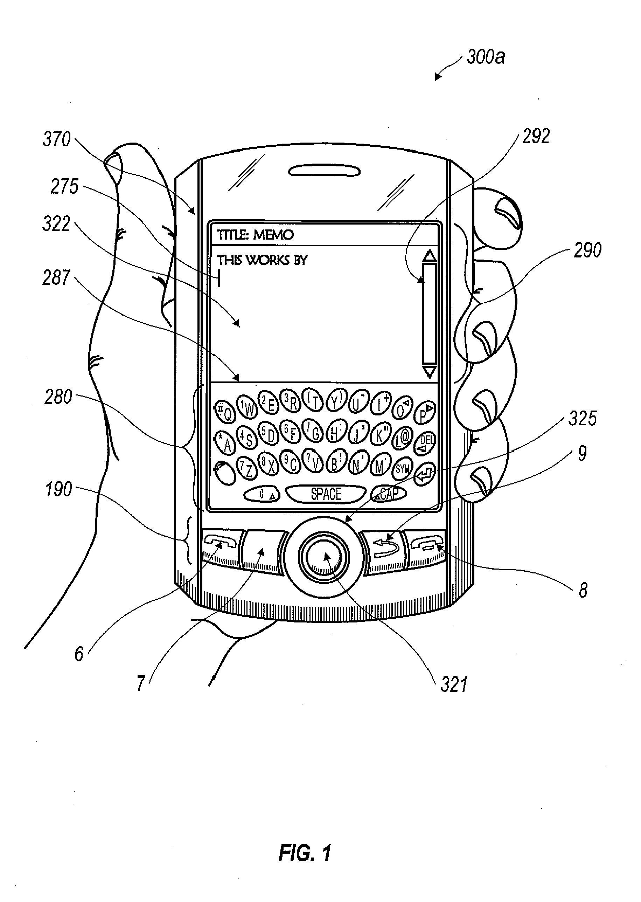

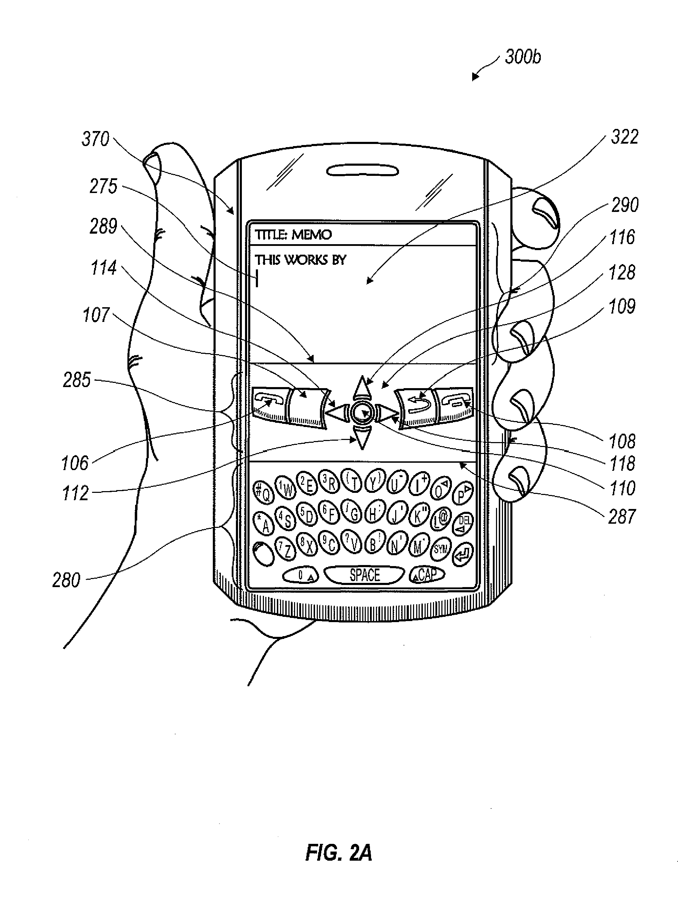

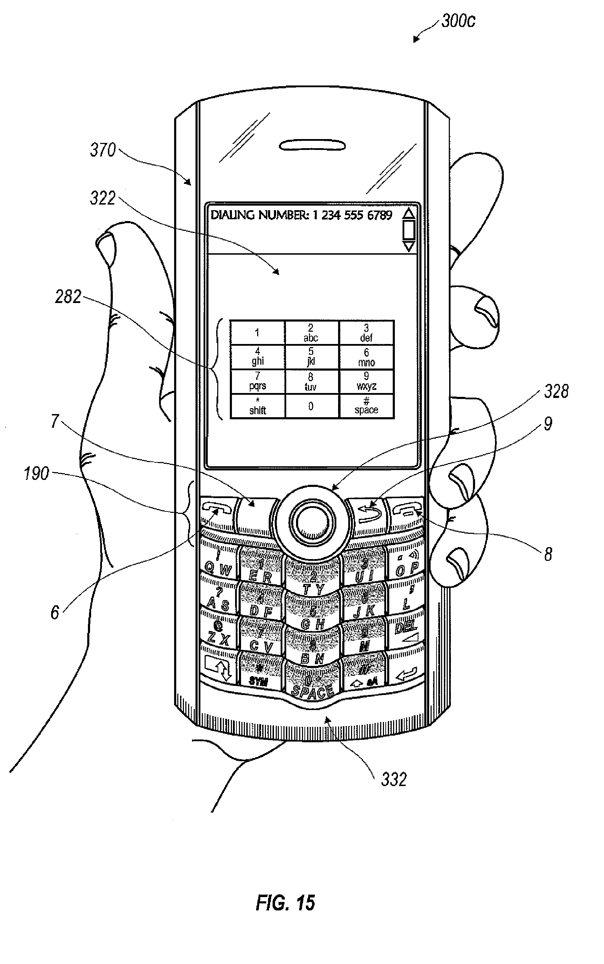

This disclosure presents a variety of different handheld devices 300 that are capable of presenting a shape adaptive display to the user. In one example, the handheld device 300a, as shown in FIG. 1, is provided with navigation keys and a trackball navigation tool 325 which provides for on screen cursor navigation. In another example, only an adaptive display screen 322 is provided on the front face 370 of the handheld device 300b, as shown in FIGs. 2A, 2B, 11-14. In yet another example as shown in FIG. 15, the handheld device 300c is equipped with an adaptive display screen 322, a physical keyboard arrangement 332, and a trackball navigational tool 325 on the front face 370 of the handheld device 300c.

In one of the presently described embodiments as shown in FIG. 1, a key arrangement 280 is presented on the adaptive display screen 322 of the handheld communication device 300a. While in other embodiments, such as FIG. 15, both a physical keyboard 332 and a key arrangement 282 on the display screen 322 are presented to the user on the front face 370 of the handheld device 300c. In this presentation, the key arrangement 282 shown on the display screen 322 is different from the arrangement of the physical keyboard 332, but in other embodiments the key arrangement can be the same as the physical keyboard 332. The key arrangements are presented below other data on the display screen 322, thereby assuring that the user's hands and fingers do not block viewing of the other data during entry.

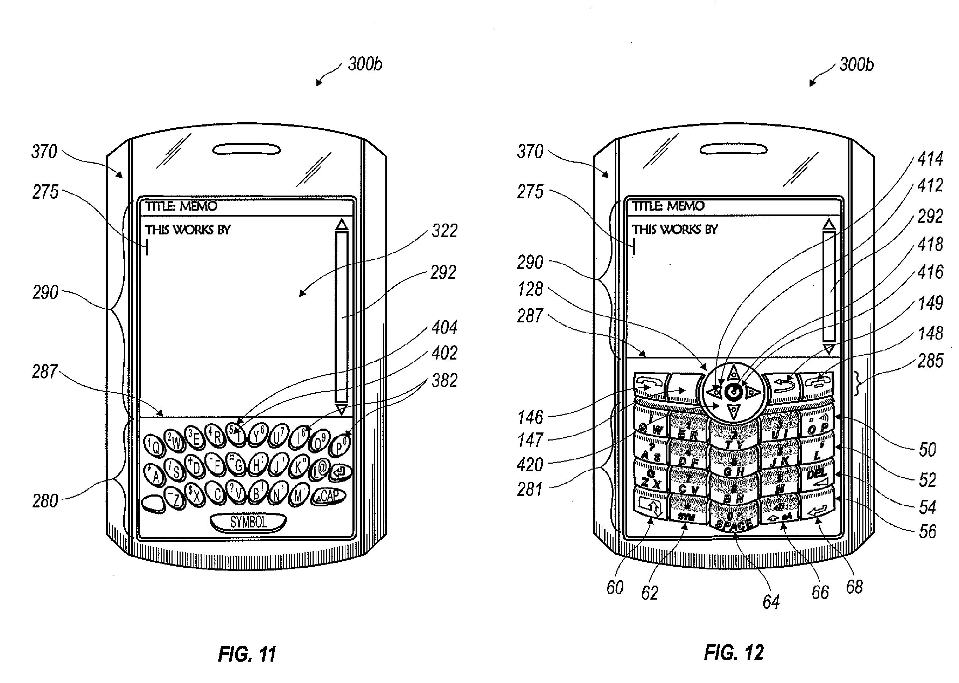

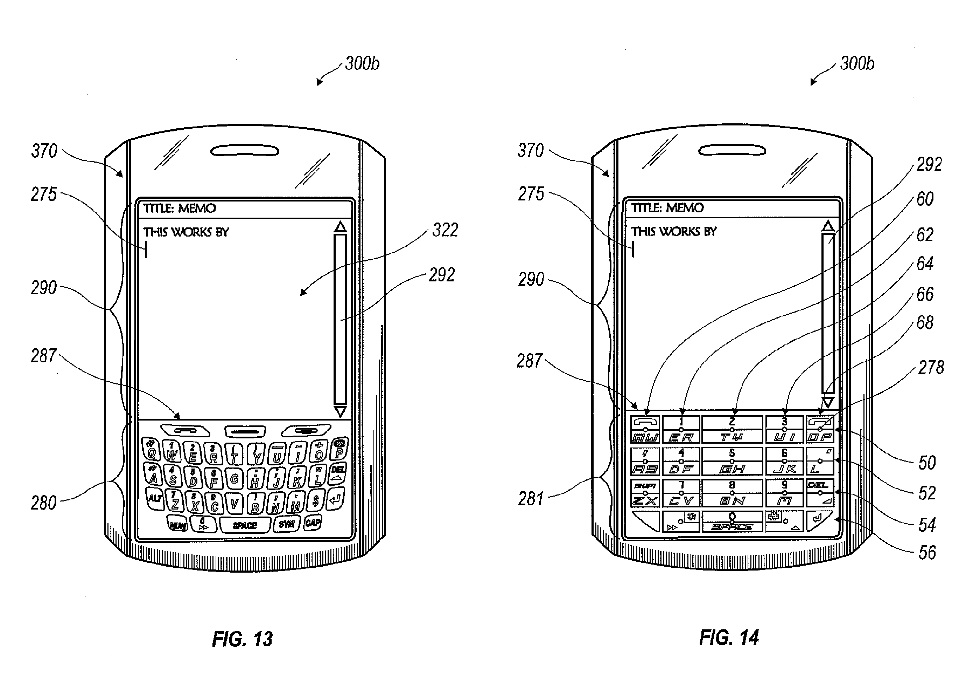

To facilitate textual data entry, an alphabetic key arrangement can be displayed on the display screen 322 for inputting textual characters. In one version, a full alphabetic key arrangement 280 is utilized in which there is one key per letter (see FIG. 1 for an example). This is preferred by some users because it can be arranged to resemble a standard keyboard with which they are most familiar. In this regard, the associated letters can be advantageously organized in QWERTY, QWERTZ, AZERTY or Dvorak layouts, among others, thereby capitalizing on certain users' familiarity with these special letter orders. In order to stay within the bounds of a limited display surface area, however, each of the keys must be commensurately small when, for example, twenty-six keys must be provided in the instance of the English language. An alternative configuration is to provide a reduced alphabetic key arrangement 281 in which at least some of the keys have more than one letter associated therewith (see FIGS. 12 and 14 for examples). This means that fewer keys are required which makes it possible for those fewer keys to each be larger than in the instance when a full key arrangement is provided on a similarly dimensioned handheld device 300. Some users will prefer the solution of the larger keys over the smaller ones, but it is necessary that software or hardware solutions be provided in order to discriminate which of the several associated letters the user intends based on a particular key actuation, a problem the full alphabetic key arrangement avoids. Preferably, this character discrimination is accomplished utilizing disambiguation software included on the handheld device 300b. To accommodate software use on the handheld device 300b, a memory and microprocessor 338 are provided within the body of the handheld device 300b for receiving, storing, processing, and outputting data during use. Therefore, the problem of needing a textual data input means is solved by the provision of either a full or reduced alphabetic key arrangement on the presently disclosed handheld device.

Keys perform well as data entry devices but present problems to the user when they must also be used to affect navigational control over a screen-cursor. In order to solve this problem, the handheld device 300a can include an auxiliary input that acts as a cursor navigation tool and which is also exteriorly located upon the front face 370 of the handheld device 300a, as shown in FIG. 1. Its front face location is particularly advantageous because it makes the tool easily thumb-actuable. In a particularly useful embodiment, the navigational tool is a trackball navigational tool 325 which is easily utilized to instruct two-dimensional screen cursor movement in substantially any direction, as well as act as an actuator when the ball 321 of the trackball navigational tool 325 is depressed like a button (see FIG. 1 for an example). The placement of the trackball navigational tool 325 is preferably below the display screen 322 and above any additional input buttons on the front face 370 of the handheld device; here, it does not block the user's view of the display screen 322 during use. In other embodiments as described below, the navigational tool may be provided as part of the adaptive display screen 322.

In some configurations, the handheld device 300 may be standalone in that it does not connect to the "outside world." One example would be a PDA that stores such things as calendars and contact information but is not capable of synchronizing or communicating with other devices. In most situations such isolation will be viewed detrimentally in that synchronization is a highly desired characteristic of handheld devices 300 today. Moreover, the utility of the handheld device 300 is significantly enhanced when connectable within a system, and particularly when connectable on a wireless basis in a network in which voice, text messaging, and other data transfer are accommodated.

As shown in FIG. 1, the handheld device 300a is cradleable in the palm of a user's hand. The handheld device 300a is provided with an adaptive display screen 322 for communicating information to a user, and a full alphabetic key arrangement 280 on the display screen 322 to enter text data and place telephone calls. In one embodiment, a set of navigational inputs 190, which are physical and fixed to the front face 370 of the handheld device 300aare provided below the display screen 322 on the handheld device 300. This set of navigational inputs 190 allow the user to navigate through an application page shown on the display screen 322. In this set of navigational inputs 190, a connect/send key 6 is preferably provided to assist the user in placement of a phone call. Additionally, a disconnect/end key 8 is provided. The connect/send key 6 and disconnect/end key 8 preferably are arranged in a row that includes an auxiliary input device 328 in the form of a navigation tool which is a trackball navigation tool 325 in at least one embodiment. The menu key 7 is used to bring up a menu on the display screen 322 and the escape key 9 is used to return to the previous screen or previous menu selection. While the navigational inputs 190 in this embodiment are arranged using physical inputs, other embodiments do not have a physical navigation row and use only navigational keys shown on the display of the handheld device 300.

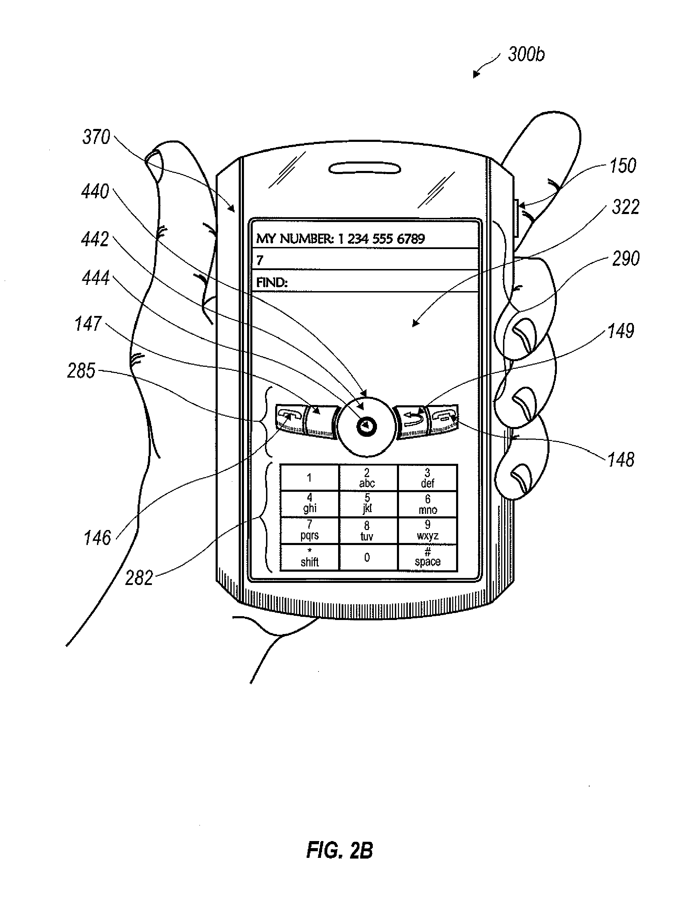

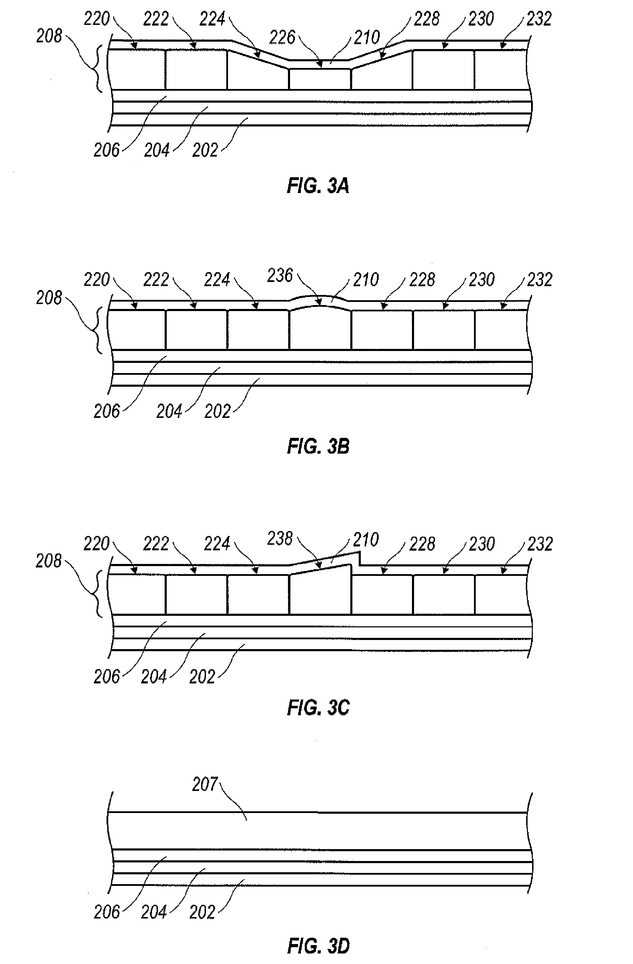

As further illustrated in FIG. 1, the adaptive display screen 322 includes a full alphanumeric key arrangement 280 that is configurable to a different key arrangement. Other examples of the visibly different key arrangements are presented in FIGS. 2B and 11-15. The display screen 322 presents these visibly different key arrangements through a display mechanism which can be a LCD screen. The details regarding layers of material involved in the construction of these adaptive display screens 322 are described below in relation to FIGS. 3A-3C.

An examplary embodiment of the technology described in this disclosure concerns an adaptive display screen 322 with a shape-changing upper surface. The adaptive display screen 322 is configured for incorporation on a multi-mode, microprocessor-controlled wireless handheld device 300. The handheld device 300 can be a two-way mobile communication device having electronic messaging communications capabilities and possibly also voice communications capabilities. Depending on the functionality provided by the handheld device 300, in various embodiments the handheld device 300 may be a data communication device, a multiple-mode communications device configured for both data and voice communication, a mobile telephone, a personal digital assistance (PDA) enabled for wireless communication, among other things.

The adaptive display screen 322 comprises a visual display that variously presents visibly different key arrangements to an operator or user of the handheld device 300 in dependence upon the mode of operation of the incorporating handheld device 300. Examples regarding the visibly different key arrangements are presented herein below. These examples are provided for illustrative purposes and are not intended to limit the presentation of the visibly different key arrangements to the ones described below.

Additionally, the adaptive display screen 322 comprises a shape-adaptive, exposed upper surface presented to the operator for digital press-engagement. The exposed upper surface changes shape in dependence upon the presented key arrangement. Examples of these changes in shape are presented herein below, but the shapes are not limited to those described herein and could take other forms as one skilled in the art would understand.

Further, the adaptive display screen 322 comprises a display presented key arrangement taking the form of one of the following: a navigational key arrangement, a text entry key arrangement, a symbol entry key arrangement and numeric entry key arrangement. These examples are provided for illustrative purposes and are not intended to limit the presentation of the visibly different key arrangements to the ones described below.

Analogously, the variously presentable visibly different key arrangements comprise a navigational key arrangement, a text entry key arrangement, a symbol entry key arrangement, and numeric entry key arrangement. Each visibly different key arrangement presents a plurality of discrete keys that each visibly define a two-dimensionally signified key zone and also establishes a shape-adaptive target area. The exposed upper surface presents a corresponding tactilely perceptible key zone for each of a plurality of the discrete keys. Each tactilely perceptible key zone likewise has substantially the same shape.

The shape-adaptive exposed upper surface constitutes an upper portion of a shape-adaptive overlay to the adaptive display screen 322. The shape-adaptive overlay comprises a plurality of size-alterable zones that change the shape of the exposed upper surface in dependence upon a microprocessor-controlled volumetric change of at least one of the size-alterable zones.

In addition, the size-alterable zone located above at least one of the visibly defined key zones is expanded to thereby establish a tactilely perceptible convex area on the shape-adaptive exposed upper surface that physically signifies the respective overlaid visible key zone. This tactilely perceptible convex area is centered within one of the visibly defined key zones. Also, the size-alterable zone located above at least one of the visibly defined key zones is contracted to thereby establish a tactilely perceptible concave area on the shape-adaptive exposed upper surface that physically signifies the respective overlaid visible key zone.

Furthermore, the size-alterable zone, located above at least one of the visibly defined key zones, comprises electrically responsive media that changes volume when electrically stimulated. The electrically responsive media is confined within a pocket formed in the flexible sheet upon which the shape-adaptive exposed upper surface is established. The flexible sheet is composed of substantially transparent material which permits and accommodates visualization of the adaptive display screen 322 therethrough.

In another embodiment, the size-alterable zone is a solid electrically responsive media. In this arrangement as shown in FIG. 3D, solid shape adaptive upper surface 207 is controlled to respond to the activation layer 206 located beneath the solid shape adaptive upper surface 207.

The adaptive display screen 322 is capable of variably presenting visibly different key arrangements to an operator of the device 300. These different key arrangements can be shown to the user through the display screen 322. This enables the key arrangement to be tailored to a specific application running on the handheld device 300 or mode in which the device 300 is currently operating. Some examples of programs that the device 300 could be capable of running include an email application, a memo application, a calendar application, and an address book. These various applications could require different types of input devices such as an alphabetic key arrangement to enter textual data into the application, such as the memo application. If the handheld device 300 is being operated in a mode such that it is enabled to dial or receive telephone calls, a telephone keypad can be displayed on the display screen 322 to enable the user to enter telephone numbers or other related information. Likewise in a data communication mode, the display screen 322 features an alphabetic key arrangement to enable entry of alphabetic characters and other textual data such as symbols and punctuation. In at least one embodiment, the display screen 322 presents an alphanumeric key arrangement to enable entry of alphabetic or numeric characters and other textual data such as symbols and punctuation, while in the data communication mode.

The arrangement of keys, which are used to input data into the handheld device 300, can be of a physical nature such as actuable buttons in addition to the keys of a software nature, typically constituted by virtual representations of physical keys on a display screen 322 (referred to herein as "virtual keys"). It is also contemplated that the user input can be provided as a combination of the two types of keys. Each key (physical or virtual) of the plurality of keys has at least one actuable action which can be the input of a character, a command or a function. In this context, "characters" are contemplated to exemplarily include alphabetic letters, language symbols, numbers, punctuation, insignias, icons, pictures, and even a blank space. Input commands and functions can include such functions as delete, backspace, moving a cursor up, down, left or right, initiating an arithmetic function or command, initiating a command or function specific to an application program or feature in use, initiating a command or function programmed by the user and other such commands and functions that are well known to those persons skilled in the art. Specific keys or other types of input devices can be used to navigate through the various applications and features thereof. Further, depending on the application or feature in use, specific keys can be enabled or disabled.

In the case of virtual keys, the indicia for the respective keys are shown on the display screen 322, which in one examplary embodiment is enabled by touching the display screen 322, for example, with a stylus to generate the character or activate the indicated command or function. Some examples of display screens 322 capable of detecting a touch include resistive, capacitive, projected capacitive, infrared and surface acoustic wave (SAW) touchscreens.

As previously mentioned, the keys can be physical and/or virtual; these keys can be combined in many different ways as appreciated by those skilled in the art. In one embodiment, physical and virtual keys are combined such that the plurality of enabled keys for a particular application or feature of the handheld electronic device 300 is shown on the display screen 322 in the same configuration as the physical keys. Using this configuration, the user can select the appropriate physical key corresponding to what is shown on the display screen 322. Thus, the desired character, command or function is obtained by depressing the physical key corresponding to the character, command or function displayed at a corresponding position on the display screen 322, rather than touching the display screen 322.

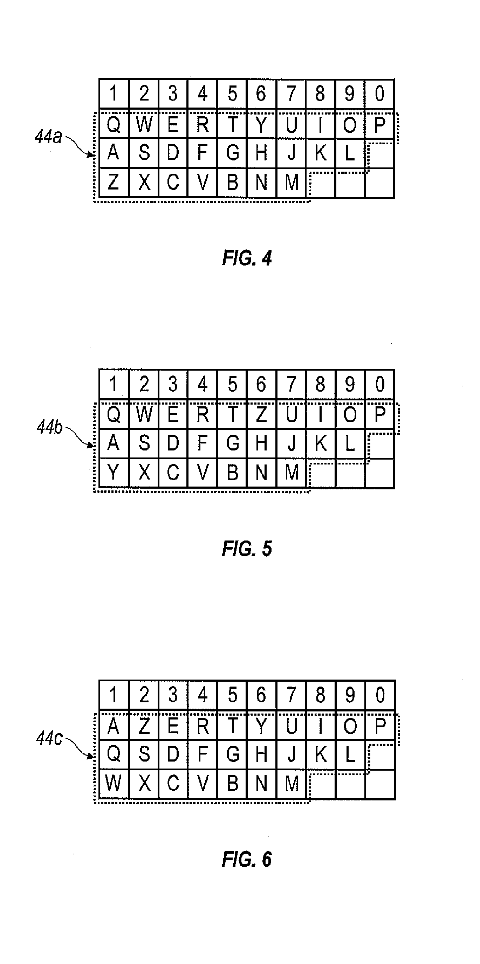

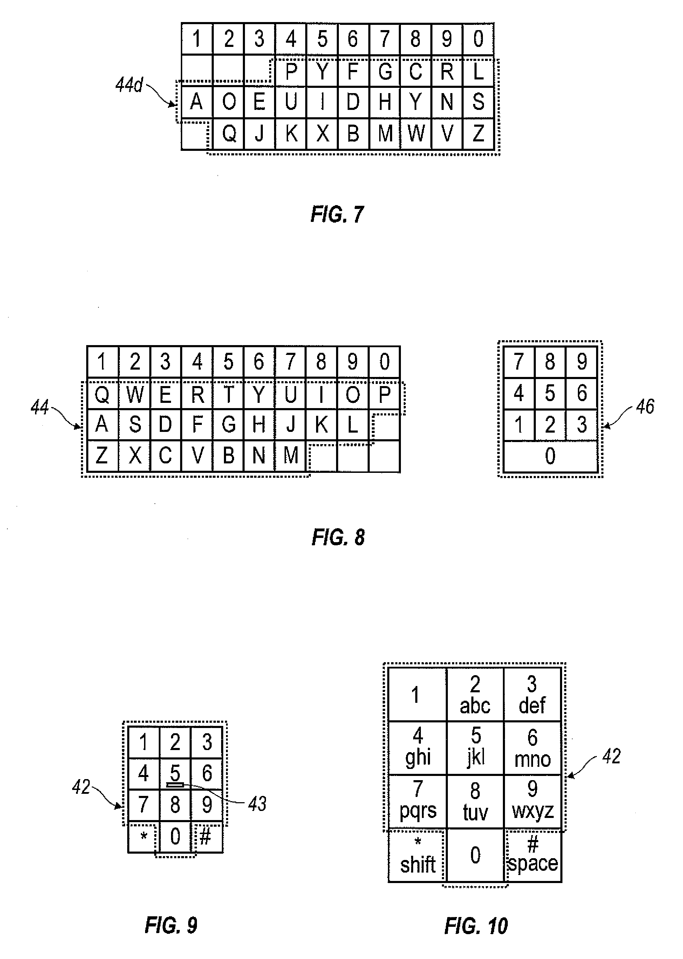

The various characters, commands and functions associated with keyboard typing in general are traditionally arranged using various conventions. The most common of these in the United States, for instance, is the QWERTY keyboard layout. Others include the QWERTZ, AZERTY, and Dvorak keyboard configurations. The QWERTY keyboard layout is the standard English-language alphabetic key arrangement 44a shown in FIG. 4. The QWERTZ keyboard layout is normally used in German-speaking regions; this alphabetic key arrangement 44b is shown in FIG. 5. The AZERTY keyboard layout 44c is normally used in French-speaking regions and is shown in FIG. 6. The Dvorak keyboard layout was designed to allow typists to type faster; this alphabetic key arrangement 44d is shown in FIG. 7. In other examplary embodiments, keyboards having multi-language key arrangements can be contemplated.

Alphabetic key arrangements are often presented along with numeric key arrangements. Typically, the numbers 1-9 and 0 are positioned in the row above the alphabetic keys 44a-d, as shown in FIG. 4-7. Alternatively, the numbers share keys with the alphabetic characters, such as the top row of the QWERTY keyboard (see Fig. 11 for an example). Yet another exemplary numeric key arrangement is shown in FIG. 8, where a "ten-key" style numeric keypad 46 is provided on a separate set of keys that is spaced from the alphabetic/numeric key arrangement 44. The ten-key styled numeric keypad 46 includes the numbers "7", "8", "9" arranged in a top row, "4", "5", "6" arranged in a second row, "1", "2", "3" arranged in a third row, and "0" in a bottom row. Further, a numeric phone key arrangement 42 is exemplarily illustrated in FIG. 9.

As shown in FIG. 9, the numeric phone key arrangement 42 may also utilize a surface treatment on the surface of the center "5" key. This surface treatment is configured such that the top surface of the key is distinctive from the surface of other keys. Preferably the surface treatment is in the form of a raised bump or recessed dimple 43. Alternatively, raised bumps may be positioned on the housing around the "5" key and do not necessarily have to be positioned directly on the key. When implemented as part of the adaptive display screen 322 of the present technology, this "5" key can include a specialized shape, a taller key surface, or other unique surface treatment such as the bump or dimple described above.

Some handheld devices include a combined text-entry key arrangement and a telephony keyboard. Examples of such handheld devices 300 include mobile stations, cellular telephones, wireless personal digital assistants (PDAs), two-way paging devices, and others. Various keyboards are used with such devices and can be termed a full keyboard, a reduced keyboard, or phone key pad. While in other handheld devices 300, the key arrangements can be presented upon user request thereby reducing the amount of information presented to the user at any given time and enabling easier reading and viewing of the same information.

In embodiments of a handheld device 300 having a full key arrangement, the alphabetic characters are singly associated with the plurality of physical keys. Thus, in an English-language keyboard of this configuration, there are at least 26 keys in the plurality so that there is at least one key for each letter.

Referring now to FIGS. 11 and 13, there is shown handheld devices 300b incorporating full keyboards for the alphabetic characters. While both devices 300b feature numeric keys, the handheld device 300b shown in FIG. 11 incorporates the numeric keys 382 in a single row, whereas the handheld device 300b of FIG. 13 features numeric keys arranged according to the ITU Standard E.161 as shown in FIG. 9. The latter numeric arrangement can be described as an overlaid numeric phone keypad arrangement.

As intimated above, in order to further reduce the size of a handheld device 300 without making the physical keys or virtual keys too small, some handheld devices 300 use a reduced keyboard, where more than one character/command/function is associated with each of at least a portion of the plurality of keys. This results in certain keys being ambiguous since more than one character is represented by or associated with the key, even though only one of those characters is typically intended by the user when activating the key.

Thus, certain software usually runs on the microprocessor 338 of these types of handheld devices 300 to determine or predict what letter or word has been intended by the user. Some examples of software include predictive text routines which typically include a disambiguation engine and/or predictive editor application. The software preferably also has the ability to recognize character letter sequences that are common to the particular language, such as, in the case of English, words ending in "ing". Such systems can also "learn" the typing style of the user making note of frequently used words to increase the predictive aspect of the software. Other types of predictive text computer programs may be utilized with the reduced keyboard arrangements described herein, without limitation. Some specific examples include the multi-tap method of character selection and "text on nine keys".

The keys of reduced keyboards are laid out with various arrangements of characters, commands and functions associated therewith. In regards to alphabetic characters, the different key layouts identified above are selectively used based on a user's preference and familiarity; for example, the QWERTY keyboard layout is most often used by English speakers who have become accustomed to the key arrangement.

FIG. 15 shows a handheld device 300c that carries an example of a reduced keyboard using the QWERTY keyboard layout on a physical keyboard array of twenty keys comprising five columns (60, 62, 64, 66, 68) and four rows (50, 52, 54, 56). Fourteen keys are used for alphabetic characters and ten keys are used for numbers. Nine of the ten numbers share a key with alphabetic characters. The "space" key 63 and the number "0" share the same key 63, which is centered on the device 300 and centered below the remainder of the numbers on the keyboard 332. In other examplary embodiments, the number "0" may be located on other keys.

In this examplary embodiment illustrated in FIG. 15, the keyboard 332 includes a color scheme of the numeric phone keys having a two tone appearance, with the upper portion of the numeric keys being a first color and the lower portion of the numeric keys being a second color. The first color may be lighter than the second color, or darker than the second color. Furthermore, the send key 6 and end key 8 are located on keys with alphabetic indicia have a background color and/or color of the symbols that are different from the other keys of the keyboard arrangement.

Reference is now made to FIG. 14, which shows an examplary key arrangement 281 of twenty keys composed of five columns (60, 62, 64, 66, 68) and four rows (50, 52, 54, 56). Fourteen keys are associated with alphabetic characters and ten keys are associated with numbers. Many of the keys have different sizes than the other keys. In particular, the keys in the middle column 64 are wider than keys in the outer columns 60, 62, 66 and 68. To readily identify the user interface for the phone application, the numeric phone keys 0-9 include a color scheme that is different from that of the remaining keys associated with the QWERTY key arrangement.

The first row 50 of keys includes in order the following key combinations for the text entry and telephony mode: "QW", "ER/1", "TY/2", "UI/3", and "OP". The second row 52 includes the following key combinations in order: "AS/,", "DF/4", "GH/5", "JK/6", and "L/." The third row 54 includes the following key combinations in order: "ZX/sym", "CV/7", "BN/8", "M/9" and "backspace/delete". The fourth row 56 includes the following key combinations in order: "alt", "next/*", "space/0", "shift/#" and "return/enter".

Another embodiment of a reduced alphabetic keyboard is found on a standard phone keypad. Most handheld electronic devices 300b having a phone key pad also typically include alphabetic key arrangements overlaying or coinciding with the numeric keys as shown in FIG. 10. Such alphanumeric phone keypads are used in many, if not most, traditional handheld telephony mobile communication devices 300 such as cellular handsets.

The International Telecommunications Union ("ITU") has established telephone standards for the arrangement of alphanumeric keys. The standard telephone numeric key arrangement shown in FIGS. 9 (no alphabetic letters) and 10 (with alphabetic letters) corresponds to ITU Standard E.161, entitled "Arrangement of Digits, Letters, and Symbols on Telephones and Other Devices That Can Be Used for Gaining Access to a Telephone Network." This standard is also known as ANSI TI.703-1995/1999 and ISO/IEC 9995-8:1994. As shown in FIG. 2B, the telephone numeric key arrangement with alphabetic letters can be presented on the adaptive display screen 322. The telephone numeric arrangement as shown can be aptly described as a top-to-bottom ascending order three-by-three-over-zero pattern.

The adaptive display screen 322 of the present disclosure is capable of presenting key arrangements as described above including those taking the form of one of the following: a navigational key arrangement, a text entry key arrangement, a symbol entry key arrangement, and a numeric entry key arrangement. In addition to the alphabetic character and numeric character arrangements described above, the navigational key arrangement can be like the ones shown in FIGS. 2A, 2B and 12. The navigational key arrangement 285 as described herein includes at least a navigation tool to direct on screen cursor navigation. Furthermore, the navigational key arrangement 285 can include keys located proximate to the navigation tool that are used in performing navigation functions on the display of handheld device 300b. These navigational keys can include the connect and disconnect keys as mentioned herein as well.

Referring now to FIG. 2A, one example of the navigation tool 128 includes a 4-way navigation button configuration with or without a centralized select key 110. This type of navigational key arrangement 285 allows the user to navigate a cursor 275 on the display screen 322 in addition to navigating forms, web sites and other cursor navigable pages presented on the display screen 322. Another type of navigational tool 440, shown in FIG. 2B, has an inner key 444 surrounded by an outer ring 442. The inner key 444 is used to make selections of items that have been user-designated on the display screen 322 of the handheld device 300b. The outer ring 442 can function as a scrolling device wherein a clockwise rotation moves the cursor down the page displayed on the screen 322 on the handheld device 300b and a counter-clockwise rotation moves the cursor up the page. In other examplary embodiments, the scrolling can be implemented in opposite directions as well. Additionally, arrows or other indicators can be provided in the outer ring 442 to provide left and right navigation in addition to rotation indicators.

In order to provide tactile or feedback to the user of the device 300b, the navigational key arrangement is shown on the display screen and the screen is adapted such that a shape presented on the display screen 322 of the device 300b corresponding to the navigational key arrangement on the display screen. In the case of the 4-way navigational key arrangement shown in FIG. 2A, the individual arrows 112, 114, 116, 118 can be formed on the adaptive display screen 322 such that the surface of the screen 322 takes on a shape that is tactilely detectible, such as raised surface triangle. The button 110 in the middle may be raised as well so as to provide tactile feedback. The arrow keys 112, 114, 116, 118 and central button 110 can also be tactilely signified through the use of smaller bumps. These bumps allow the user to locate these keys but the tactilely detectable area is not the same as the image shown on the display screen 322. These signifying bumps or convex areas allow the user to detect that they are engaging the appropriate button through the tactile feedback provided during actuation. Alternatively, depressions or concave areas may be implemented.

Similarly, the navigation key 440 shown in FIG. 2B with an inner button 444 and outer ring 442 can be shaped so as to provide tactile feedback to the user during engagement of the keys. There are several possible arrangements for this, a few of which are described below. In one example, the outer ring 442 is shaped such that the most outer portion of the ring 442 is taller/higher than the most inner portion of the ring 442. Thus, the surface of the outer ring 442 slopes upward from the inner button 444to the edge of the outer ring 442.

Likewise, the various key arrangements are configured so that the upper surface of the display screen 322 can change shape. The upper surface changes in response to the information displayed on the display screen 322. Thus, a handheld device 300 with the adaptive display screen 322 could be enabled to feature various key arrangements and additionally have a correspondingly shaped upper surface. In some embodiments, the shapes of the keys shown on the display screen 322 are replicated by the shape-changing upper surface. While in other embodiments, the shape-changing upper surface only indicates a location for the key shown on the display screen 322 such that the key can be detected tactilely. This can include laying out convex areas (bumps) or concave areas (depressions) that are located within the boundaries of each of the keys.

Some examples of the types of shapes that can be produced using the shape-changing upper surface can be seen with respect to FIGS. 3A-3C. These figures illustrate a possible layering of surfaces that form the display screen 322 of the handheld electronic device 300. The bottom layer 202 is a layer in which the liquid crystal display (LCD) would be found. The LCD visually presents a key zone that establishes a target area. A capacitive or other touch screen layer 204 is positioned above the LCD layer. The capacitive layer 204 is used to detect the depression of a key that is user selected. This capacitive layer 204 is used to detect digital press-engagement or other actuation of the key zone shown on the display screen 322. Next, an activation layer 206 is positioned above the capacitive layer 204. The activation layer 206 is used to activate the cells located above in the shape-changing upper surface 208. This shape-changing upper surface 208 can be constructed such that it incorporates a cover layer 210. Alternatively, the cover layer 210 may be provided as a portion of the shape-changing upper surface 208. This cover layer 210 provides an extra layer of protection to the display screen 322. The shape-changing upper surface 208 alternatively can be described as a shape-adaptive, exposed upper surface that presents a corresponding tactilely perceptible key zone for the keys. In a preferred embodiment, the layers above the display layer are composed of a substantially transparent material. When these layers are composed of substantially transparent material, they allow for visualization of images presented on the lower display of the adaptive display screen 322. Other known layouts may also be implemented so as to enable viewing of a visual display that variously presents visibly different key arrangements to an operator of a wireless handheld device 300.

As shown in FIG. 3A, the activation layer 206 can be adapted such that size-alterable zone 226 when activated is contracted, while the remaining size-alterable zones 220, 222, 224 and 228, 230, 232 are not activated. Thus, the activation layer 206 can control a single size-alterable zone without activating the adjacent or neighboring size-alterable zones. However, in response to the changes of a size-alterable zone the adjacent size-alterable zones may or may not experience changes in shape as will be explained below. These size alterable zones 220, 222, 224, 226, 228, 230, and 232 can change shape in response to a control program that adjusts the shape and size of the zones in association with the corresponding keys that are displayed on the display screen 322. In the examplary embodiment shown in FIG. 3A, the size-alterable zones 224, 228 neighboring the activated size-alterable zone 226 change shape in response to the shape of the activated size-alterable zone 226. In this embodiment, the change in shape of one size-alterable zone 226 can cause the neighboring size-alterable zones 224, 228 to change shape as well.

The shape-changing upper surface layer 208 can be made of a material that changes size in response to a controlled input to the layer 208. This material can be described as a responsive media. In one examplary embodiment, the responsive media in the shape-changing upper surface layer 208 is a material that experiences a density and/or viscosity change, for instance changing from the liquid phase to the solid phase. Alternatively, the liquid can become denser depending upon the electric charge applied to the media. In still other examplary embodiments, the media can be a gas also capable of changing the shape of the pocket in which the gas is held. In one embodiment, the size-alterable zone 220, 222, 224, 226, 228, 230, or 232 comprises an electrically responsive media that changes volume when electrically stimulated. In a particular embodiment, the electrical stimulation is provided through a change in current being applied to the size-alterable zone 220, 222, 224, 226, 228, 230, or 232 or a change in voltage being applied. Other forms of stimulation are also considered within the scope of this disclosure that would produce a volumetric change in a particular media.

In at least one embodiment, the size-alterable zones 220, 222, 224, 226, 228, 230, and 232 are configured such that the responsive media is confined within a pocket of a flexible sheet. The flexible sheet of the upper surface can be provided with pockets or voids that would accommodate a gas or liquid. This would allow the upper surface to be constructed and assembled as a single unit. Depending on the media used in the flexible sheet and the electrical stimulation that is applied, the size-alterable zone 220, 222, 224, 226, 228, 230, or 232 could expand or contract as described above.

As shown in FIG. 3B, the activated size-alterable zone 236 is expanded thereby establishing a tactilely perceptive convex area on the shape-changing upper surface layer 208 physically signifying the respective overlaid visible key zone. In one examplary embodiment, this expansion is caused through an increase in the volume of the media in the size-alterable zone 236. This increase in volume of the size-alterable zone 236 can be produced by the activation layer 206, which in at least one embodiment is capable of supplying electrical stimulation to the shape-changing upper surface layer 208. Alternatively, a single size-alterable zone 220, 222, 224, 226, 238, 230, or 232 can be stimulated so that a tactilely perceptible concave area is formed on the shape-changing upper surface layer 208. The convex and concave areas serve as tactile indicators of the location of the visibly defined key zones shown on the display screen 322. These tactile indicators allow a user to sense which key is being depressed by receiving tactile feedback upon actuation of the key.

As shown in FIG. 3C, in another examplary embodiment, the size-alterable zone 238 is controlled so that the upper surface of the size-alterable zone 238 has a sloped upper surface. The sloped upper surface can be achieved through stimulation of the size-alterable zone 238. The shapes described in relation to FIGS. 3A, 3B and 3C can take a variety of different forms depending upon the stimulation or activation that is provided to the size-alterable zone 226, 236, or 238.

In another examplary embodiment as shown in FIG. 3D, the size-alterable zones of a solid shape-changing upper surface layer 207 are controlled through the activation layer 206. The size-alterable zones are not specifically shown in FIG. 3D, since these zones are capable of changing shape and size depending on the activation layer 206. The activation layer 206 can be electrically or magnetically controlled. In at least one embodiment, the activation layer 206 has a grid like structure that is capable of producing size-alterable zones in the shape-changing upper surface layer 207. The solid shape-changing upper surface layer 207 can be constructed from magnetically or electrically activated solids such as an electro-active polymer. The activation layer 206 is positioned above the capacitive layer 204 and bottom layer 202. While not shown in FIG. 3D, the solid shape-changing upper surface layer may have cover layer 210.

The above described size-alterable zones are used in combination with a visual display screen 322 that presents visibly different key arrangements to an operator of the handheld device 300. Several examples of these visibly different key arrangements are presented in FIGS. 1, 2A, 2B, 11-15. While these figures illustrate several examples of the key arrangements that can be presented by the display screen 322, other known keyboard arrangements can be used in place of these key arrangements as well. In one examplary embodiment, these key arrangements are presented to the user by an electronic display mechanism such as an LCD. As previously described in relation to FIGS. 3A-C, a shape-changing upper surface layer 208 capable of changing shape is also presented on the display screen 322. This shape-changing upper surface layer 208 changes shape in dependence upon the presented key arrangement. For example, the key arrangement shown in FIG. 11 is displayed visually and has a surface that is adapted to match the outline of the keys shown on the display screen 322. Thus, the display screen 322 both displays a visual key arrangement and corresponding surface changes. The key arrangement 280 shown on the display screen 322 is a full keyboard arrangement that is signified by having each letter of the alphabet on a single key. These keys are capable of being activated by the user by touching or otherwise engaging the area of the display screen 322 corresponding to the shape of the key shown on the display screen 322. Thus, if one wanted to activate the "T" key 402, the user could touch the outlined area 404. As shown in FIG. 11, the corresponding area is tactilely signified by having a surface on the display that is raised as compared to the areas of the display screen 322, which do not have corresponding keys. In some embodiments, a visual cue can be provided to separate the key arrangement 280 from the display screen 322 of the application 290 running on the handheld device 300b. The application 290 shown on the display screen 322 in FIG. 11 is a memo application, which allows the user to input data into the device 300b. A scrolling bar 292 is provided inside the application page 290 for the memo application so that the user can navigate the text or other information presented in the memo application. Likewise, other applications may use a scrolling bar 292 similar to that shown to enable viewing of data that will not fit on a single display screen 322 of the handheld device 300b.

The key arrangements shown on the display screen 322 can be based upon: a user designated preference, application specific settings, or mode of operation. The user may designate a preference for a full alphabetic key arrangement 280 like the ones shown in FIGS. 1, 2A, 11 and 13. Alternatively, the user may have a preference for a reduced keyboard in which large keys are displayed on the screen 322 as shown in FIGS. 12 and 14.

The alphabetic key arrangements are useful when entering text, but they do not provide easy navigation within the application portion of the display screen 322. Thus, a navigational key arrangement 285 is provided in other embodiments such as those shown in FIGS. 2A, 2B and 12. These navigational key arrangements 285 can be shown on the display screen 322 simultaneously with the alphabetic key arrangements or without the alphabetic key arrangements. When only the navigational key arrangement 285 is shown in addition to the application running, a larger portion of display screen 322 can be devoted to the application running on the device 300b. The navigational keys 285 can be implemented such that a centralized navigation key is located within a row of other navigational keys. The navigation key enables the user to direct cursor navigation on the screen 322 of handheld device 300b.

Referring to FIG. 2A, the navigational key arrangement 285 as shown is separated from the alphabetic key arrangement 280 by a dividing line 287 and from the currently running application by line 289. The navigational key arrangement 285 has a centralized navigation tool 128 that has directional keys to direct the cursor on the screen 322. The top key 116 directs a cursor 275 in an upward fashion on the display screen 322. The left key 114 directs the cursor 275 towards the left side of the display screen 322. Likewise, the right key 118 directs the cursor 275 towards the right side of the display screen 322 and the bottom key 112 directs the cursor 275 towards the bottom of the display screen 322. The center key 110 allows the user to make a selection of a user-designated item. In addition to the centralized navigation tool 128, the navigation row has a connect key 106 to place and answer telephone calls, a menu key 107 which displays a menu associated with a given application page, an escape key 109 which returns to the previously displayed application page, and a disconnect key 108 which disconnects or terminates a telephone call. While these keys are shown in FIG. 2A, other examplary embodiments will not display the connect 106 and disconnect keys 108 unless the telephone application is running. Alternatively, the connect and disconnect keys 106, 108 appear when a telephone call is received when running another application.

In another examplary embodiment, when a telephone application is running or when the device 300b is operating in a telephone mode, a telephone key arrangement 282 is shown on the adaptive display screen 322 of the handheld device 300b shown in FIG. 2B. This telephone key arrangement is in the ITU standard phone layout as described above and which users are familiar. In addition to the arrangement shown on the adaptive display screen 322, the shape changing upper surface layer 208 takes on a tactilely perceptible shape which could be like one of the ones described above. This would enable the user based upon touch to distinguish whether the "1" or "2" key was actuated. In addition, a navigational key arrangement 285 is provided above the telephone key arrangement 282. Similar to other navigation row arrangements, this navigational key arrangement 285 has a centralized scrolling navigation key 440, a connect key 146, a menu key 147, an escape key 149, and disconnect key 148. The centralized navigation key 440 is one that allows the user to scroll through a list of items and select a user-designated item. The outer ring 442 of the centralized scrolling navigation key 440 allows the user to navigate in a single direction such as up or down.
This can be achieved by user placing their finger inside the outer ring 442 and moving in a clockwise or counterclockwise direction. The select key 444 in the center of the outer ring 442 enables the user to select an item that was designated through the use of the outer ring 442. In at least one embodiment, the outer ring 442 is also contoured to provide a tactilely perceptible area associated with the visually displayed outer ring 442. In addition, the select key 444 can be controlled to exhibit a specialized shape such that it is perceptible. For example the select key 442 could have a surface which is raised as compared to the outer ring 442. Other known surface configurations are also considered within the scope of this disclosure.

In addition to the keys presented on the display screen 322, the handheld device 300b shown in FIG. 2B has a programmable physical key 150 on the side of the device 300. This programmable physical key 150 can be programmed to provide various functions relating to the handheld device 300b. For example, it could be used to switch between telephone and data/text modes of operation. In another embodiment this key 150 would function as a way to return to a home screen.

In another examplary embodiment, the handheld electronic device 300b has a reduced alphabetic key arrangement 281, a navigational key arrangement 285, and an application page 290 shown on the adaptive display screen 322 (as shown in FIG. 12). The visual arrangement of the reduced alphabetic keys 281 shown has been described above, and in one embodiment, the shape of the upper surface changes shape based on this reduced alphabetic key arrangement 281. The shape of the upper surface can also be one of the surface changes as described above. The navigational key arrangement 285 has a centralized navigation key 128, a connect key 146, a menu key 147, an escape key 149, and a disconnect key 148 (as shown in FIG. 12). The centralized navigation key 128 has directional arrows, a select button 416, and an outer ring 420. In this embodiment, the left directional arrow 412 is visually signified by the outlined arrow and additionally the upper surface changes in response to the displayed arrow such that a bump 414 is created on the upper surface within the outlined arrow. The other directional arrows shown in the figure also exhibit this characteristic. Likewise, the select button 416 is visually signified with a circle shown on the display screen 322 and a bump 418 created by the upper surface in response to the displayed select key 416. These changes in the upper surface are given as an additional example of possible surface changes that can be made in response to the displayed navigation key 128. In other embodiments, the surface characteristic can be one of those described above.

Other examples of visual key arrangements are shown in FIGS. 13 and 14. The arrangement shown in FIG. 13 has an optionally displayed top row of keys for placing and receiving telephone calls. While this row is shown in FIG. 13, other examplary embodiments of this arrangement may not display this row of keys until a telephone call is received or a telephone mode is enabled. Likewise the "QW" key in FIG. 14 has a connect symbol and the "OP" key has a disconnect symbol, these symbols may be shown either routinely or only once a telephone call is received if the device 300b is operating in a non-telephone mode. Additionally the upper surface of the shape-adaptive display screen 322 exhibits bumps within the visually outlined keys. For example, the "OP" key has a surface bump 278. These visual arrangements and surface characteristics are provided as additional examples to the above described visibly different key arrangements and shape-adaptive upper surface.

In at least one embodiment, the shape-adaptive, upper surface is incorporated into a handheld electronic device 300c which as a physical keyboard 332 as shown in FIG. 15. In the embodiment shown in FIG. 15, the navigational inputs 190 is provided above physical keyboard 332 and below the display screen 322. This navigational inputs 190 has a layout similar to that of FIG. 1 with a connect key 6, a menu key 7, an auxiliary user input 328, an escape key 9, and a disconnect key 8. When the telephone mode or application is enabled, the display screen 322 of the handheld device 300c displays a telephone key arrangement 282 on the display screen 322. The shape-adaptive display screen 322 of the present technology changes the shape of the upper surface in dependence upon the visually presented telephone arrangement 282. The shape that the upper surface assumes in one embodiment is one in which each of the keys has a bump that is centered in the target area of the two-dimensional key zone. Other surface changes as those described above can also be incorporated into this telephone key arrangement 282.

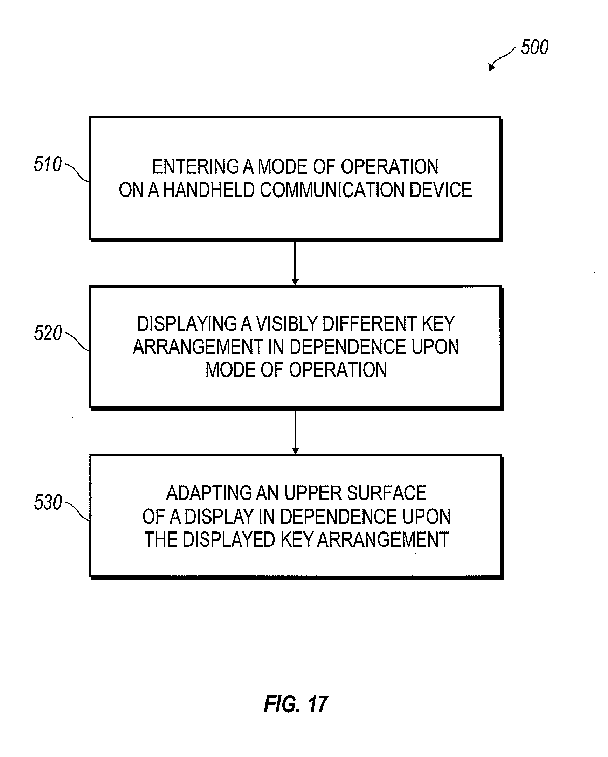

In yet another embodiment, a method 500, shown in FIG. 17, is provided for changing the shape of an adaptive display screen 322 which is configured for incorporation on a multi-mode, microprocessor-controlled wireless handheld communication device 300 having capabilities for at least voice and text or data modes of communication. The method 500 enters a mode of operation of the handheld wireless communication device 300 (block 510). This mode of operation can be selected by the user or entered through incoming communications, such as when a telephone call is received while the device 300 is operating in text or data mode of operation. Additionally, the method 500 involves displaying visibly different key arrangements on the adaptive display screen 322 in dependence upon the mode of operation of the wireless handheld device 300 (block 520). Thus, the key arrangement shown on the display screen 322 depends upon the mode of operation the wireless handheld communication. For instance in data or text mode, the key arrangement shown on the display screen 322 is one designed for entry of alphabetic characters. Thus, in the text or data mode the display screen 322 will present an alphabetic key arrangement, which could include additional keys to aid in the entry of data. Furthermore, the method 500 adapts a shape of an exposed upper surface of the adaptive display screen 322 in dependence upon the displayed key arrangement (block 530). In at least one examplary embodiment, each of the visibly different key arrangements present a plurality of discrete keys that each visibly define a two-dimensionally signified key zone. The key zone establishes a target area for press-engagement and the exposed upper surface presents a corresponding tactilely perceptible key zone for each of the plurality of discrete keys.

The above described method 500 in other embodiments incorporates various features from the description of the adaptive display screen 322 given above. Some examples of the method 500 may incorporate are: controlling an electrically responsive media to produce the shape changes, creating a convex surface on the display screen 322 within the key zone, and creating a concave surface within the key zone.

Still another embodiment, a processing subsystem is configured to be installed in a handheld communication device 300, having capabilities for at least voice and email modes of communication, comprising an adaptive display screen 322 with a shape-changing upper surface. The processing subsystem servers as an operating system for the incorporating device 300. The processing subsystem preferably includes a microprocessor 338 and a media storage device connected with other systems and subsystems of the device 300. The microprocessor 338 can be any integrated circuit or the like that is capable of performing computational or control tasks. The media storage device can exemplarily include a flash memory 338, a hard drive, a floppy disk, RAM 326, ROM, and other similar storage media.

As stated above, the operating system software controls operation of the incorporating mobile communication device 300. The operating system software is programmed to control operation of the handheld communication device 300 and is configured to transmit signals to a visual display that variously presents visibly different key arrangements in dependence upon the mode of operation of the incorporating device 300. Additionally, the operating system software is configured to change the shape of a shape-adaptive, exposed upper surface in dependence upon the presented key arrangements.

In other embodiments, the processing subsystem also includes the various features described above in relation to the adaptive display screen embodiments. The various features include presenting discrete keys defined by a two-dimensional key zone, changing the shape of the upper surface through controlled volumetric changes, establishing a tactilely perceptible concave or convex area within the key zone, among others.

Preferably, the handheld device 300 is sized for portable use and adapted to be contained in a pocket. In one examplary embodiment, the handheld device 300 is sized to be cradled in the palm of the user's hand. The handheld device 300 is advantageously sized such that it is longer than wide. This preserves the device's 300 cradleability while maintaining surface real estate for such features as the display screen 322 or an optional keyboard 332. In a development of this embodiment, the handheld device 300 is sized such that the width of the handheld device 300 measures between approximately two and three inches thereby facilitating the device 300 to be palm cradled. Furthermore, these dimension requirements may be adapted in order to enable the user to easily carry the device 300.

Further aspects of the environments, devices and methods of employment described hereinabove are expanded upon in the following details. The handheld electronic device 300 includes an input portion and an output display portion. The output display portion can be a display screen 322, such as an LCD or other similar display devices.

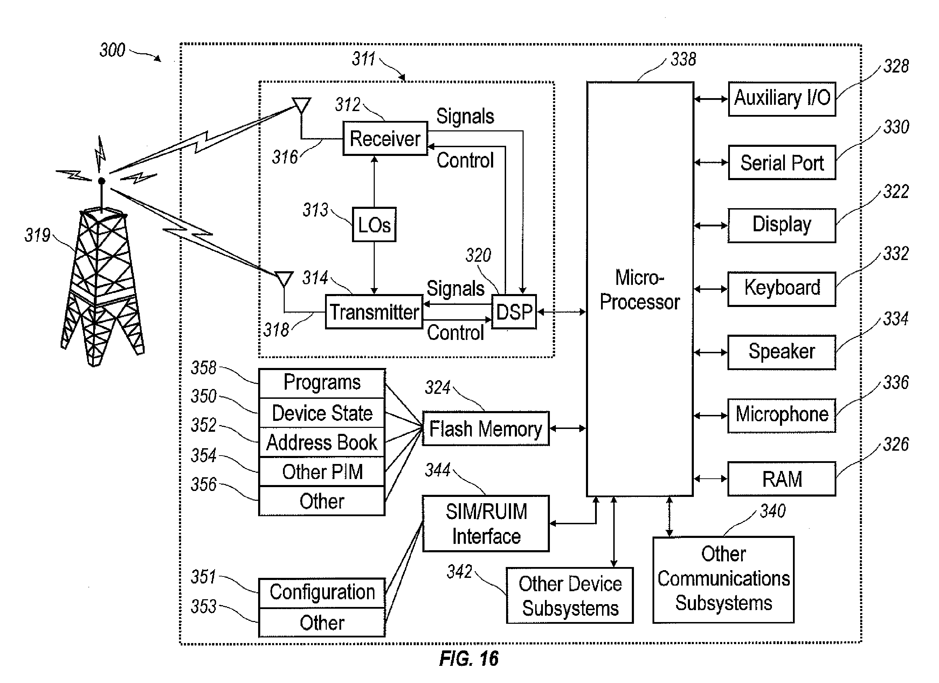

An exemplary handheld electronic device 300 and its cooperation in a wireless network 319 is exemplified in the block diagram of FIG. 16. This figure is exemplary only, and those persons skilled in the art will appreciate the additional elements and modifications necessary to make the device 300 work in particular network environments.

As shown in, the block diagram of FIG. 16 representing the communication device 300 interacting in the communication network 319 shows the device's 300 inclusion of a microprocessor 338 which controls the operation of the device 300. A communication subsystem 311 performs all communication transmission and reception with the wireless network 319. The microprocessor 338 further connects with an auxiliary input/output (I/O) subsystem 328, a serial port (preferably a Universal Serial Bus port) 330, a display screen 322, a keyboard 332, a speaker 334, a microphone 336, random access memory (RAM) 326, and flash memory 324. Other communication subsystems 340 and other device subsystems 342 are generally indicated as connected to the microprocessor 338 as well. An example of a communication subsystem 340 is that of a short range communication subsystem such as BLUETOOTH® communication module or a Wi-Fi communication module (a communication module incompliance with IEEE 802.11b) and associated circuits and components. Additionally, the microprocessor 338 is able to perform operating system functions and preferably enables execution of software applications on the communication device 300.

The above described auxiliary I/O subsystem 328 can take a variety of different navigation tool (multi-directional or single directional) such as a trackball navigation tool 325 as illustrated including the above described navigation tool. The navigation tool is preferably a trackball based device, but it can be a thumbwheel, navigation pad, or joystick. These navigation tools are preferably located on the front surface of the device 300 but may be located on an exterior surface of the device 300. Other auxiliary I/O devices can include external display devices and externally connected keyboards (not shown). While the above examples have been provided in relation to the auxiliary I/O subsystem 328, other subsystems capable of providing input or receiving output from the handheld electronic device 300 are considered within the scope of this disclosure. Additionally, other keys may be placed along the side of the device 300 to function as escape keys, volume control keys, scrolling keys, power switches, or user programmable keys, which may be programmed accordingly.

In an exemplary embodiment, the flash memory 324 is enabled to provide a storage location for the operating system, device programs, and data. While the operating system in a preferred embodiment is stored in flash memory 324, the operating system in other embodiments is stored in read-only memory (ROM) or similar storage element (not shown). As those skilled in the art will appreciate, the operating system, device application or parts thereof may be loaded in RAM 326 or other volatile memory.

In a preferred embodiment, the flash memory 324 contains programs/applications 358 for execution on the device 300 including an address book 352, a personal information manager (PIM) 354, and the device state 350. Furthermore, programs 358 and other information 356 including data can be segregated upon storage in the flash memory 324 of the device 300.

When the device 300 is enabled for two-way communication within the wireless communication network 319, it can send and receive signals from a mobile communication service. Examples of communication systems enabled for two-way communication include, but are not limited to, the General Packet Radio Service (GPRS) network, the Universal Mobile Telecommunication Service (UMTS) network, the Enhanced Data for Global Evolution (EDGE) network, and the Code Division Multiple Access (CDMA) network and those networks, generally described as packet-switched, narrowband, data-only technologies which are mainly used for short burst wireless data transfer. For the systems listed above, the communication device 300 must be properly enabled to transmit and receive signals from the communication network 319. Other systems may not require such identifying information. GPRS, UMTS, and EDGE require the use of a Subscriber Identity Module (SIM) in order to allow communication with the communication network 319. Likewise, most CDMA systems require the use of a Removable Identity Module (RUIM) in order to communicate with the CDMA network. The RUIM and SIM card can be used in multiple different communication devices 300. The communication device 300 may be able to operate some features without a SIM/RUIM card, but it will not be able to communicate with the network 319. A SIM/RUIM interface 344 located within the device 300 allows for removal or insertion of a SIM/RUIM card (not shown). The SIM/RUIM card features memory and holds key configurations 351, and other information 353 such as identification and subscriber related information. With a properly enabled communication device 300, two-way communication between the communication device 300 and communication network 319 is possible.

If the communication device 300 is enabled as described above or the communication network 319 does not require such enablement, the two-way communication enabled device 300 is able to both transmit and receive information from the communication network 319. The transfer of communication can be from the device 300 or to the device 300. In order to communicate with the communication network 319, the device 300 in the presently described embodiment is equipped with an integral or internal antenna 318 for transmitting signals to the communication network 319. Likewise the communication device 300 in the preferred embodiment is equipped with another antenna 316 for receiving communication from the communication network 319. These antennae (316, 318) in another preferred embodiment are combined into a single antenna (not shown). As one skilled in the art would appreciate, the antenna or antennae (316, 318) in another embodiment are externally mounted on the device 300.

When equipped for two-way communication, the communication device 300 features a communication subsystem 311. As is well known in the art, this communication subsystem 311 is modified so that it can support the operational needs of the device 300. The subsystem 311 includes a transmitter 314 and receiver 312 including the associated antenna or antennae (316, 318) as described above, local oscillators (LOs) 313, and a processing module 320 which in a preferred embodiment is a digital signal processor (DSP) 320.

It is contemplated that communication by the device 300 with the wireless network 319 can be any type of communication that both the wireless network 319 and device 300 are enabled to transmit, receive and process. In general, these can be classified as voice and data. Voice communication is communication in which signals for audible sounds are transmitted by the device 300 through the communication network 319. Data is all other types of communication that the device 300 is capable of performing within the constraints of the wireless network 319.

Exemplary embodiments have been described hereinabove regarding both handheld electronic devices 300, as well as the communication networks within which they cooperate. It should be appreciated, however, that a focus of the present disclosure is the enablement of an adaptive display screen that is capable of changing the shape of an exposed upper surface in dependence upon a presented key arrangement.

## Claims

1. An adaptive display screen with a shape-changing upper surface and which is configured for incorporation on a multi-mode, microprocessor-controlled wireless handheld communication device having capabilities for at least voice and email modes of communication, said adaptive display screen comprising:
a visual display that variously presents visibly different key arrangements to an operator of the device in dependence upon the mode of operation of the incorporating device; and
a shape changing, exposed upper surface presented to the operator for selective digital press-engagement, said exposed upper surface changing shape in dependence upon the presented key arrangement.

2. The adaptive display screen of claim 1, further comprising a display presented key arrangement taking the form of one of the following: a navigational key arrangement, a text entry key arrangement, a symbol entry key arrangement, and a numeric entry key arrangement.

3. The adaptive display screen of claim 1 or claim 2, wherein the variously presentable visibly different key arrangements comprise: a navigational key arrangement, a text entry key arrangement, a symbol entry key arrangement, and a numeric entry key arrangement.

4. The adaptive display screen of any one of the preceding claims, wherein each visibly different key arrangement presents a plurality of discrete keys that each visibly define a two-dimensional signified key zone that establishes a target area for press-engagement and said shape changing, exposed upper surface presents a corresponding tactilely perceptible key zone for each of a plurality of said discrete keys.

5. The adaptive display screen of claim 4, wherein each tactilely perceptible key zone has substantially the same shape.

6. The adaptive display screen of claim 4, wherein said shape changing, exposed upper surface constitutes an upper portion of a shape-adaptive overlay to said adaptive display.

7. The adaptive display screen of claim 6, wherein said shape-adaptive overlay comprises a plurality of size-alterable zones that change the shape of said exposed upper surface in dependence upon a microprocessor-controlled volumetric change of at least one of said size-alterable zones.

8. The adaptive display screen of claim 7, wherein a size-alterable zone located above at least one of the visibly defined key zones is expanded thereby establishing a tactilely perceptible convex area on the shape changing, exposed upper surface that physically signifies the respective overlaid visible key zone.

9. The adaptive display screen of claim 8, wherein said tactilely perceptible convex area is centered within one of the visibly defined key zones.

10. The adaptive display screen of claim 7, wherein a size-alterable zone located above at least one of the visibly defined key zones is contracted thereby establishing a tactilely perceptible concave area on the shape changing, exposed upper surface that physically signifies the respective overlaid visible key zone.

11. The adaptive display screen of claim 7, wherein a size-alterable zone located above at least one of the visibly defined key zones comprises electrically responsive media that changes volume when electrically stimulated.

12. The adaptive display screen of claim 11, wherein said electrically responsive media is confined within a pocket formed in a flexible sheet upon which said shape changing, exposed upper surface is established.

13. The adaptive display screen of claim 11, wherein said electrically responsive media is a gas confined within the pocket formed in said flexible sheet upon which said shape changing, exposed upper surface is established.

14. The adaptive display screen of claim 11, wherein said electrically responsive media is a fluid confined within the pocket formed in said flexible sheet upon which said shape changing, exposed upper surface is established.

15. The adaptive display screen of claim 14, wherein said flexible sheet is composed of substantially transparent material thereby accommodating visualization of said adaptive display therethrough.

16. The adaptive display screen of claim 11, wherein said electrically responsive media is a solid.

17. A method for changing the shape of an upper surface on an adaptive display which is configured for incorporation on a multi-mode, microprocessor-controlled wireless handheld communication device having capabilities for at least voice and email modes of communication, said method comprising:
displaying visibly different key arrangements on an adaptively display in dependence upon the mode of operation of a wireless handheld communication device;
adapting a shape of an exposed upper surface of the adaptive display in dependence upon the displayed key arrangement.

18. The method of claim 17, wherein each visibly different key arrangement presents a plurality of discrete keys that each visibly define a two-dimensional signified key zone that establishes a target area for press-engagement and said exposed upper surface presents a corresponding tactilely perceptible key zone for each of a plurality of said discrete keys.

19. A processing subsystem configured to be installed in a handheld communication device, having capabilities for at least voice and email modes of communication, comprising an adaptive display with a shape-changing upper surface, said processing subsystem comprising:
operating system software that controls operation of an incorporating handheld communication device, said operating software is configured: to transmit signals to a visual display that variously presents visibly different key arrangements in dependence upon the mode of operation of the incorporating device and to change the shape of a shape changing, exposed upper surface in dependence upon the presented key arrangements.

20. A handheld electronic device capable of voice and email communication comprising:
a body having a front face;
an adaptive display screen comprising a visual display that variously presents visibly different key arrangements to an operator of the device in dependence upon the mode of operation of the incorporating device and a shape changing, exposed upper surface presented to the operator for selective digital press-engagement, said exposed upper surface changing shape in dependence upon the presented key arrangement.

21. The handheld electronic device of claim 20, further comprising a display presented key arrangement taking the form of one of the following: a navigational key arrangement, a text entry key arrangement, a symbol entry key arrangement, and a numeric entry key arrangement.

22. The handheld electronic device of claim 20 or claim 21, wherein the variously presentable visibly different key arrangements comprise: a navigational key arrangement, a text entry key arrangement, a symbol entry key arrangement, and a numeric entry key arrangement.

23. The handheld electronic device of any one of claims 20 to 22, wherein each visibly different key arrangement presents a plurality of discrete keys that each visibly define a two-dimensional signified key zone that establishes a target area for press-engagement and said shape changing, exposed upper surface presents a corresponding tactilely perceptible key zone for each of a plurality of said discrete keys.

24. The handheld electronic device of claim 23, wherein each tactilely perceptible key zone has substantially the same shape.

25. The handheld electronic device of claim 23, wherein said shape changing, exposed upper surface constitutes an upper portion of a shape-adaptive overlay to said adaptive display.

26. The handheld electronic device of claim 25, wherein said shape-adaptive overlay comprises a plurality of size-alterable zones that change the shape of said exposed upper surface in dependence upon a microprocessor-controlled volumetric change of at least one of said size-alterable zones.

27. The handheld electronic device of claim 26, wherein a size-alterable zone located above at least one of the visibly defined key zones is expanded thereby establishing a tactilely perceptible convex area on the shape changing, exposed upper surface that physically signifies the respective overlaid visible key zone.

28. The handheld electronic device of claim 27, wherein said tactilely perceptible convex area is centered within one of the visibly defined key zones.

29. The handheld electronic device of claim 26, wherein a size-alterable zone located above at least one of the visibly defined key zones is contracted thereby establishing a tactilely perceptible concave area on the shape changing, exposed upper surface that physically signifies the respective overlaid visible key zone.

30. The handheld electronic device of claim 26, wherein a size-alterable zone located above at least one of the visibly defined key zones comprises electrically responsive media that changes volume when electrically stimulated.

31. The handheld electronic device of claim 30, wherein said electrically responsive media is confined within a pocket formed in a flexible sheet upon which said shape changing, exposed upper surface is established.

32. The handheld electronic device of claim 30, wherein said electrically responsive media is a gas confined within the pocket formed in said flexible sheet upon which said shape changing, exposed upper surface is established.

33. The handheld electronic device of claim 30, wherein said electrically responsive media is a fluid confined within the pocket formed in said flexible sheet upon which said shape changing, exposed upper surface is established.

34. The handheld electronic device of claim 33, wherein said flexible sheet is composed of substantially transparent material thereby accommodating visualization of said adaptive display therethrough.

35. The handheld electronic device of claim 30, wherein said electrically responsive media is a solid.
